# EUROPEAN PATENT APPLICATION

(11) **EP 4 344 777 A2**
(43) Date of publication of application: **03.04.2024**
(21) Application number: 23195842.2
(22) Date of filing: 06.09.2023
(51) Int. Cl.: B01L 3/00

(54) **SAMPLE ANALYSIS DEVICES AND SYSTEMS**

(30) Priority: 07.09.2022 CN 202222392653 U
(71) Applicant: Shanghai Ruiyu Biotech Co. Ltd., Shanghai 201615 (CN)
(72) Inventor: LUO, Puwen, Shanghai (CN)
(74) Representative: Wang, Bo

(57) **Abstract**

The embodiments of the present disclosure provide a sample analysis device and a sample analysis system. The sample analysis device includes a base and one or more sample analysis units provided on the base. Each sample analysis unit includes a liquid storage chamber, an optical imaging chamber, a drainage chamber, and a sealing element. The liquid storage chamber is arranged on the base. The optical imaging chamber is arranged on the base, and a side of the optical imaging chamber is connected to the liquid storage chamber. The drainage chamber is arranged on the base. The drainage chamber is connected to the other side of the optical imaging chamber, and the drainage chamber is provided with an opening connecting with atmosphere. The sealing element removably seals the opening.

## Description

### CROSS-REFERENCE TO RELATED APPLICATIONS

This application claims priority to Chinese Patent Application No. 202222392653 .1, filed on September 7, 2022, the entire contents of which are hereby incorporated by reference.

### TECHNICAL FIELD

The present disclosure relates to the field of biomedicine, and in particular, to sample analysis devices and systems.

### BACKGROUND

An important aspect in the field of medical diagnostics and biomedical research involves the detection, identification, quantification, and characterization of various cells and biomolecules of interest by testing biological samples such as blood, spinal fluid, cell cultures, and urine. Healthcare providers and biomedical researchers routinely analyze such biological samples for micro-presentation, cell counts, and concentrations of cells and biomolecules.

Existing sample analysis devices typically include mixing holes and sample chambers that include an inlet, an imaging hole, and an outlet. In order to observe biological samples, it is necessary to prepare and mix a sample liquid in a mixing hole, and then use a pipetting device (e.g., a pipette gun, a rubber tip dropper, etc.) to move the sample liquid to the inlet of the sample chamber. The sample liquid flows from the inlet and fills the imaging hole, then flows to the outlet, and finally, the sample liquid is observed through the imaging hole. The above operation process is complicated, and it is easy to be contaminated during the process of transferring the sample liquid by the pipetting device.

### SUMMARY

One of the embodiments of the present disclosure provides a sample analysis device. The sample analysis device includes a base and one or more sample analysis units provided on the base. Each sample analysis unit includes a liquid storage chamber, an optical imaging chamber, a drainage chamber, and a sealing element. The liquid storage chamber is arranged on the base. The optical imaging chamber is arranged on the base, and a side of the optical imaging chamber is connected to the liquid storage chamber. The drainage chamber is arranged on the base. The drainage chamber is connected to the other side of the optical imaging chamber, and the drainage chamber is provided with an opening connecting with atmosphere. The sealing element removably seals the opening.

In some embodiments, the sealing member includes a sealing plug, a sealing membrane, or a sealing cap.

In some embodiments, the sample analysis unit further includes a pressure-applying member configured to apply negative pressure to the drainage chamber.

In some embodiments, the optical imaging chamber is in a bar shape, and the liquid storage chamber and the drainage chamber are respectively located at two ends of the optical imaging chamber along a length direction.

In some embodiments, the optical imaging chamber is connected to the liquid storage chamber through a first passage. An area of a cross-section of the first passage perpendicular to a length direction of the first passage is smaller than an area of a cross-section of the optical imaging chamber perpendicular to the length direction of the first passage. The area of the cross-section of the first passage perpendicular to the length direction of the first passage is larger than a maximum cross-section area of a sample particle to be tested. The optical imaging chamber is connected to the drainage chamber through a second passage. An area of a cross-section of the second passage perpendicular to a length direction of the second passage is smaller than an area of a cross-section of the optical imaging chamber perpendicular to the length direction of the second passage.

In some embodiments, the liquid storage chamber is provided with a dyeing reagent layer or a reagent pre-embedding chamber.

In some embodiments, optical imaging chambers of at least two sample analysis units are connected.

In some embodiments, a top of the optical imaging chamber is provided with a transparent cover.

In some embodiments, the sealing member is connected to the opening, and the sealing member is capable of converting between a sealed state and a non-sealed state.

In some embodiments, the sealing member includes a connecting member removably inserted in the opening. A gas channel is provided in the connecting member, and the connecting member is moved to convert between a state of the gas channel to connect the drainage chamber and atmosphere and a state of the gas channel to disconnect the drainage chamber and the atmosphere.

In some embodiments, the sealing member further includes a button arranged at an end of the connecting member away from the base, the connecting member is sleeved with a first spring member, and the first spring member is located between the button and the base.

In some embodiments, the sealing member includes a top cover, a sealing gasket, a fixing member, and a second spring member. The sealing gasket is arranged under the top cover and corresponds to the opening. The fixing member passes through the top cover and maintains a fixed position relative to the drainage chamber. The fixing member is provided with a groove matching the top cover. The second spring member is sleeved on the fixing member, and the second spring member is located between the top cover and the base. The sealing gasket seals the opening when the top cover is snapped into the groove, and the second spring member is capable of pushing the top cover to move to open the opening when the top cover is pushed to disengage the top cover from the groove.

In some embodiments, the sealing member further includes a handle, and the handle is arranged on the top cover.

In some embodiments, the sample analysis unit further includes a pressure-applying member configured to apply a negative pressure to the drainage chamber. The pressure-applying member is provided on the sealing member.

In some embodiments, the pressure-applying member includes an air pump connected to the sealing member. The sealing member is controlled, by the air pump, to be opened or closed to control the drainage chamber to connect or disconnect atmosphere, and a negative pressure is applied to the drainage chamber through the air pump.

One of the embodiments of the present disclosure provides a sample analysis system. The sample analysis system includes the sample analysis device as described in any one of the above embodiments.

In some embodiments, the sample analysis system further includes at least one fluorescent light source, at least one bright field light source, at least one optical system configured to narrow a fluorescent light beam and/or a bright field light beam, a detection device, and a computing unit.

One of the embodiments of the present disclosure provides a sample analysis method for analyzing a sample reagent using the sample analysis device described above. The sample analysis method includes adding the sample reagent to the liquid storage chamber, removing the sealing member of the drainage chamber and draining the sample reagent from the liquid storage chamber to the optical imaging chamber, and analyzing the sample reagent in the optical imaging chamber.

In some embodiments, pretreating the sample reagent in the liquid storage chamber includes performing at least one operation of shaking, staining, mixing, stirring, blowing, and incubating on the sample reagent in the liquid storage chamber.

According to the sample analysis device in the above embodiments, the liquid storage chamber and the optical imaging chamber are connected, so that a sample reagent may flow directly from the liquid storage chamber to the optical imaging chamber without the need to move the sample reagent to the optical imaging chamber through an external device such as a pipetting device, which simplifies the operation process and prevents the sample reagent from being contaminated by external impurities. By providing the drainage chamber and the sealing member, the seal removably seals the drainage chamber to control the sample reagent selectively flow into the optical imaging chamber. When the sealing member seals the drainage chamber, the sample reagent can not flow into the optical imaging chamber, which facilitates filling, storing, and preparing the sample reagent in the liquid storage chamber. When the sealing member is removed from the drainage chamber, the sample reagent can flow into the optical imaging chamber to simplify the transfer operation of the sample reagent.

### BRIEF DESCRIPTION OF THE DRAWINGS

The present disclosure is further illustrated in terms of exemplary embodiments. These exemplary embodiments are described in detail with reference to the drawings. These embodiments are non-limiting exemplary embodiments, in which like reference numerals represent similar structures, and wherein:
FIG. 1 is a schematic diagram illustrating a structure of a sample analysis device according to some embodiments of the present disclosure;
FIG. 2 is a schematic diagram illustrating an A-A cross-section of the sample analysis device illustrated in FIG. 1;
FIG. 3 is a schematic diagram illustrating a sealed state of a sealing member according to some embodiments of the present disclosure;
FIG. 4 is a schematic diagram illustrating a non-sealed state of a sealing member according to some embodiments of the present disclosure;
FIG. 5 is a schematic diagram illustrating a non-sealed state of a sealing member according to some other embodiments of the present disclosure;
FIG. 6 is a schematic diagram illustrating a sealed state of a sealing member according to some other embodiments of the present disclosure;
FIG. 7 is a schematic diagram illustrating a B-B cross-section of the sample analysis device illustrated in FIG. 1;
FIG. 8 is a schematic diagram illustrating a C-C cross-section of the sample analysis device illustrated in FIG. 1;
FIG. 9 is a schematic diagram illustrating a structure of a sample analysis device according to some other embodiments of the present disclosure;
FIG. 10 is a schematic diagram illustrating a structure of a sample analysis system according to some embodiments of the present disclosure; and
FIG. 11 is a flowchart illustrating an exemplary sample analysis method according to some embodiments of the present disclosure.

### DETAILED DESCRIPTION

In order to more clearly illustrate the technical solutions related to the embodiments of the present disclosure, a brief introduction of the drawings referred to the description of the embodiments is provided below. Obviously, the drawings described below are only some examples or embodiments of the present disclosure. Those having ordinary skills in the art, without further creative efforts, may apply the present disclosure to other similar scenarios according to these drawings. Unless obviously obtained from the context or the context illustrates otherwise, the same numeral in the drawings refers to the same structure or operation.

It will be understood that the terms "system," "engine," "unit," "module," and/or "block" used herein are one method to distinguish different components, elements, parts, sections, or assemblies of different levels in ascending order. However, the terms may be displaced by other expressions if they may achieve the same purpose.

As used in the disclosure and the appended claims, the singular forms "a," "an," and "the" include plural referents unless the content clearly dictates otherwise. Generally speaking, the terms "comprise" and "include" only imply that the clearly identified steps and elements are included, and these steps and elements do not constitute an exclusive list, and the method or device may also include other steps or elements.

The flowcharts used in the present disclosure may illustrate operations that systems implement according to some embodiments of the present disclosure. It is to be expressly understood, the operations of the flowcharts may be implemented not in order. Conversely, the operations may be implemented in inverted order, or simultaneously. Moreover, one or more other operations may be added to the flowcharts. One or more operations may be removed from the flowcharts.

A sample analysis device in the embodiments of the present disclosure may be used for cell culture, cell counting, concentration determination, imaging analysis, or other assays. In some embodiments, the sample analysis device is designed to perform assays for oncology, immunooncology, virology, cell therapy, cell line development, regenerative medicine (stem cell research), brewing science, and renewable energy. The sample analysis device may be used to analyze cell lines (NCI-60 cancer cells, etc.), primary cells (PBMC, splenocytes, leukocyte isolates, monocultures, thymocytes), stem cells, platelets, hemoglobinocytes, yeasts, algae, CHO cells, etc. In some embodiments, the sample analysis device may be used to perform assays such as cell growth and proliferation, viability, activation-induced cell size changes, transduction efficiency, apoptosis, autophagy, cell cycle, senescence, ROS, mitochondrial potential and health, surface marker population analysis, intracellular staining population analysis, etc.

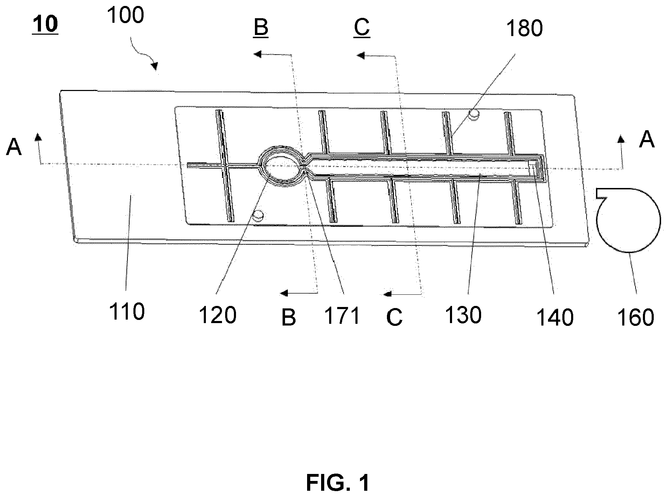

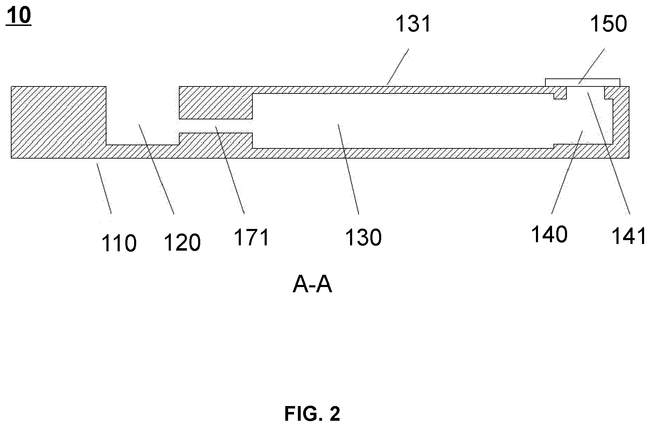

FIG. 1 is a schematic diagram illustrating a structure of a sample analysis device according to some embodiments of the present disclosure. FIG. 2 is a schematic diagram illustrating an A-A cross-section of the sample analysis device illustrated in FIG. 1.

As shown in FIG. 1 and FIG. 2, the embodiments of the present disclosure provide a sample analysis device 10. The sample analysis device 10 includes a base 110 and one or more sample analysis units 100 provided on the base 110. A sample analysis unit 100 may be a multihole plate for preparing and analyzing a sample reagent. The sample reagent may be a biological cell sample. As shown in FIG. 1, the sample analysis unit 100 includes a liquid storage chamber 120, an optical imaging chamber 130, a drainage chamber 140, and a sealing member 150.

The base 110 may be a substrate provided with the liquid storage chamber 120, the optical imaging chamber 130, the drainage chamber 140, and the sealing member 150. In some embodiments, the base 110 may be a rectangular or square plate-like structure. In other embodiments, the base 110 may be a structure of a circular, triangular, hexagonal, or other shape, which is not limited in the present disclosure. In some embodiments, one or more reinforcing bars 180 may be provided on the base 110. A plurality of reinforcement bars 180 may be arranged staggeredly or in parallel on the base 110 to strengthen the base 110.

The liquid storage chamber 120 is provided on the base 110 for filling, storing, and preparing the sample reagent. In some embodiments, the liquid storage chamber 120 may be a chamber provided on the base 110, which may be a circular or square groove. In some embodiments, a filling port is formed above the liquid storage chamber 120, from which the sample reagent may be added to the liquid storage chamber 120.

The optical imaging chamber 130 may be a chamber capable of transmitting light to allow the sample reagent therein to be viewed from outside. The optical imaging chamber 130 is provided on the base 110, and a side of the optical imaging chamber 130 is connected to the liquid storage chamber 120, so that the sample reagent in the liquid storage chamber 120 may flow directly to the optical imaging chamber 130. In some embodiments, the optical imaging chamber 130 is a hollow chamber formed on the base 110. For example, the optical imaging chamber 130 is a groove recessed downwardly from an upper surface of the base 110, which is covered by a transparent cover 131. The transparent cover forms a certain spacing from a bottom of the groove, thereby forming the optical imaging chamber 130. As another example, if the base 110 as a whole is made of a transparent material, the hollow optical imaging chamber 130 may be formed directly in the base 110 by an injection molding process, etc. In some embodiments, a cross-section of the optical imaging chamber 130 may be configured in various shapes such as rectangular, circular, sectoral, etc.

The drainage chamber 140 is provided on the base 110. The drainage chamber 140 is connected to the other side of the optical imaging chamber 130, and the drainage chamber 140 is provided with an opening 141 connected to the atmosphere. It may be appreciated that the liquid storage chamber 120 and the drainage chamber 140 are connected to different sides of the optical imaging chamber 130. Merely by way of example, when the optical imaging chamber 130 is rectangular in shape, the drainage chamber 140 and the liquid storage chamber 120 may be connected to opposite or adjacent sides of the optical imaging chamber 130, respectively. The drainage chamber 140 is used to control whether the sample reagent in the liquid storage chamber 120 needs to flow to the optical imaging chamber 130. For example, during a stage of preparing the sample reagent in the liquid storage chamber 120, the sample reagent in the liquid storage chamber 120 may be controlled not to flow to the optical imaging chamber 130, i.e., the liquid storage chamber 120 and the optical imaging chamber 130 are in a fluidly disconnected state and the sample reagent is stored in the optical imaging chamber 130. As another example, during a stage of analyzing the sample reagent, the sample reagent may be controlled to flow from the liquid storage chamber 120 to the optical imaging chamber 130, i.e., the liquid storage chamber 120 and the optical imaging chamber 130 are in a fluidly connected state to facilitate analyzing the sample reagent.

The sealing member 150 removably seals the opening 141 of the drainage chamber 140. After the sealing member 150 seals the drainage chamber 140, the sample reagent is added to the liquid storage chamber 120, at which point the opening 141 of the drainage chamber 140 is disconnected to the atmosphere by the sealing member 150. The sample reagent may block a side of the optical imaging chamber 130 that is connected to the liquid storage chamber 120, thereby making both sides of the optical imaging chamber 130 disconnected from the atmosphere, such that air in the optical imaging chamber 130 and the drainage chamber 140 is sealed to form an air pressure to prevent the sample reagent from flowing into the optical imaging chamber 130. When the sealing member 150 unseals the drainage chamber 140, the drainage chamber 140 connects with the atmosphere, and the side of the optical imaging chamber 130 that is connected to the drainage chamber 140 also connects with the atmosphere, at this time, the sample reagent in the liquid storage chamber 120 can flow into the optical imaging chamber 130.

According to the sample analysis device 10 in the above embodiments, the liquid storage chamber 120 and the optical imaging chamber 130 are connected, so that the sample reagent can flow directly from the liquid storage chamber 120 to the optical imaging chamber 130 without the need to move the sample reagent to the optical imaging chamber 130 through an external device such as a pipetting device, which simplifies the operation process and prevents the sample reagent from being contaminated by external impurities. By providing the drainage chamber 140 and the sealing member 150, the sealing member 150 removably seals the drainage chamber 140 to control the sample reagent to selectively flow into the optical imaging chamber 130. When the sealing member 150 seals the drainage chamber 140, the sample reagent can not flow into the optical imaging chamber 130, which facilitates filling, storing, and preparing the sample reagent in the liquid storage chamber 120. When the sealing member 150 is removed from the drainage chamber 140, the sample reagent can flow into the optical imaging chamber 130 to simplify the transfer operation of the sample reagent.

In some embodiments, the drainage chamber 140 is a circular or square groove. In some embodiments, a sidewall of the drainage chamber 140 is connected to the optical imaging chamber 130, and the opening 141 of the drainage chamber 140 is formed on an upper surface of the drainage chamber 140. In some embodiments, the opening 141 of the drainage chamber 140 is formed on a side surface of the drainage chamber 140.

In some embodiments, the sealing member 150 includes a sealing plug. In some embodiments, the sealing plug includes a tie rod and a plug. The plug is detachably provided in the opening 141 of the drainage chamber 140, thereby blocking the drainage chamber 140 from connecting with the atmosphere. The tie rod may protrude from the drainage chamber 140, facilitating a user to pull the sealing plug out of the drainage chamber 140 by pulling the tie rod, thereby connecting the drainage chamber 140 with the atmosphere.

In some embodiments, the sealing member 150 includes a sealing membrane. In some embodiments, a sealing membrane is sealed at the opening 141 of the drainage chamber 140 to block the drainage chamber 140 from connecting with the atmosphere. When the sealing needs to be released, the drainage chamber 140 may connect with the atmosphere by tearing off or puncturing the sealing membrane. In some embodiments, the sealing membrane is a membrane that is fixed to the opening 141 of the drainage chamber 140 by injection molding or adhesion, etc.

In some embodiments, the sealing member 150 includes a sealing cap. In some embodiments, the sealing cap is adapted to the opening 141 of the drainage chamber 140, and the sealing cap is detachably covered on the opening 141 of the drainage chamber 140 to block the drainage chamber 140 from connecting with the atmosphere. In some embodiments, the sealing cap fits with the opening 141 of the drainage chamber 140 through threads. In some embodiments, the sealing cap is engaged with the opening 141 of the drainage chamber 140 through snapping.

In some embodiments, the sealing member 150 is connected to the opening 141, and the sealing member 150 is capable of converting between a sealed state and a non-sealed state in a condition in which the sealing member 150 is connected to the opening 141. The sealed state refers to a state in which the drainage chamber 140 is disconnected from the atmosphere by the sealing of the sealing member 150. The non-sealed state refers to a state in which the drainage chamber 140 connects with the atmosphere. When the drainage chamber 140 needs to be connected with the atmosphere, the sealing member 150 does not need to be removed, which is convenient for operation. In some embodiments, the sealing member 150 may be reused.

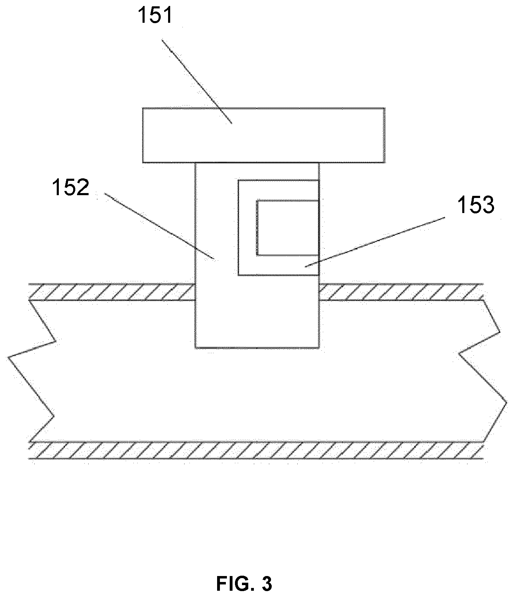

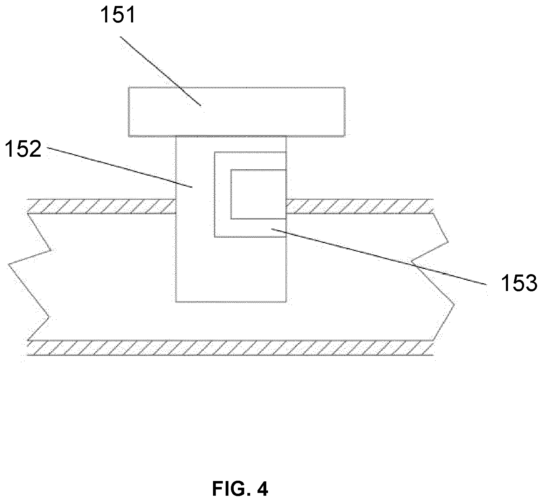

FIG. 3 is a schematic diagram illustrating a sealed state of a sealing member according to some embodiments of the present disclosure. FIG. 4 is a schematic diagram illustrating a non-sealed state of a sealing member according to some embodiments of the present disclosure.

Merely by way of example, as shown in FIG. 3 and FIG. 4, the sealing member 150 includes a connecting member 152, and the connecting member 152 is removably inserted in the opening 141. A gas channel 153 is provided in the connecting member 152, and the connecting member 152 is moved to convert between a state of the gas channel 153 to connect the drainage chamber 140 and atmosphere and a state of the gas channel 153 to disconnect the drainage chamber 140 and the atmosphere. The connecting member 152 is used to seal the opening 141. In some embodiments, the connecting member 152 has a shape that matches the opening 141 to facilitate the sealing. In some embodiments, the connecting member 152 moves relative to the opening 141. For example, the connecting member 152 moves upwards or downwards. In some embodiments, entrances at both ends of the gas channel 153 are both located on a sidewall of the connecting member 152, and respectively located on horizontal planes of different heights. Merely by way of example, the gas channel 153 may be a U-shaped channel provided in the connecting member 152, and openings at both ends are provided on the sidewall of the connecting member 152. By controlling relative positions of the entrances at both ends of the gas channel 153 and the drainage chamber 140, it is possible to control whether the drainage chamber 140 connects with the atmosphere. For example, as shown in FIG. 3, the connecting member 152 is inserted in the opening 141, and the entrances at both ends of the gas channel 153 are located above the drainage chamber 140. The gas channel 153 itself connects with the atmosphere, at this time, the drainage chamber 140 is sealed by the connecting member 152 and disconnected from the atmosphere, and it may be considered that the sealing member 150 is in the sealed state. As another example, as shown in FIG. 4, the connecting member 152 is inserted in the opening, the entrance at one end of the gas channel 153 (i.e., the entrance at a top in FIG. 4) is located above the drainage chamber 140, and the entrance at the other end of the gas channel 153 (i.e., the entrance at a bottom in FIG. 4) is connected to the drainage chamber 140. At this time, the drainage chamber 140 connects with the atmosphere through the gas channel 153, and it may be considered that the sealing member 150 is in the non-sealed state.

In some embodiments, the sealing member 150 further includes a button 151 arranged at an end of the connecting member 152 away from the base 110. The connecting member 152 is sleeved with a first spring member (not shown in the figures), and the first spring member is located between the button 151 and the base 110. The button 151 is used to facilitate pressing. For example, an operator may press the button 151 directly or through other devices (such as a motor). In some embodiments, the button 151 is arranged above the connecting member 152 to facilitate applying a pressing force. In some embodiments, one end of the first spring member abuts against a bottom of the button 151 and the other end of the first spring member abuts against an outer wall of the drainage chamber 140, such that the first spring member can exert elastic force on the button 151 and the outer wall of the drainage chamber 140, respectively. In some embodiments, when no external force is applied to the button 151, the sealing member 150 is in the sealed state under the elastic force of the first spring member. After pressing force is applied to the button 151, the sealing member 150 is capable of being converted from the sealed state to the non-sealed state.

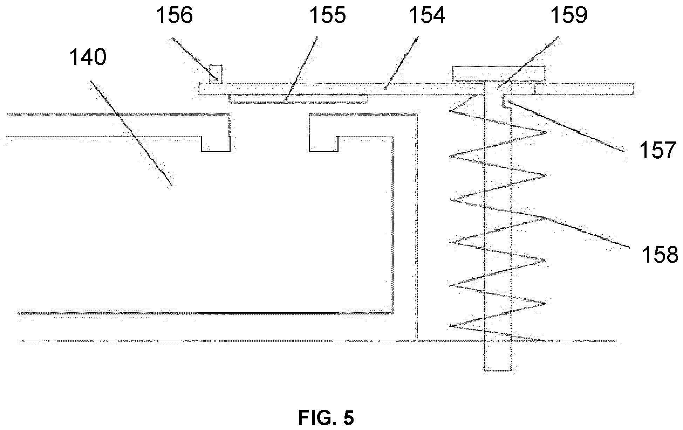

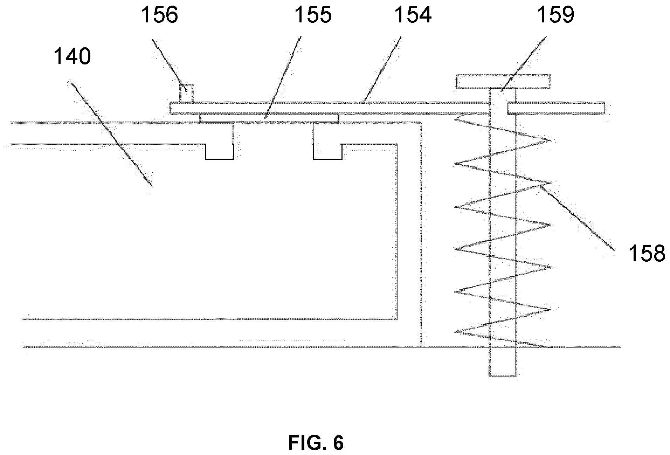

FIG. 5 is a schematic diagram illustrating a non-sealed state of a sealing member according to some other embodiments of the present disclosure. FIG. 6 is a schematic diagram illustrating a sealed state of a sealing member according to some other embodiments of the present disclosure.

Merely by way of example, as shown in FIG. 5 and FIG. 6, the sealing member 150 may include a top cover 154, a sealing gasket 155, a fixing member 159, and a second spring member 158. The sealing gasket 155 is arranged under the top cover 154 and corresponds to the opening 141. The fixing member 159 passes through the top cover 154 and maintains a fixed position relative to the drainage chamber 140. The fixing member 159 is provided with a groove 157 matching with the top cover 154. The second spring member 158 is sleeved on the fixing member 159, and the second spring member 158 is located between the top cover 154 and the base 110. When the top cover 154 is snapped into the groove 157, the sealing gasket 155 seals the opening 141. When the top cover 154 is pushed to disengage the top cover 154 from the groove 157, the second spring member 158 is capable of pushing the top cover 154 to move to open the opening 141.

The top cover 154 may open or close the opening 141 by its own movement. In some embodiments, the top cover 154 may move in a horizontal direction and a vertical direction. More descriptions regarding opening or closing of the opening 141 by the movement of the top cover may be found hereinafter.

The sealing gasket 155 is used to contact the opening 141 to seal the opening 141. In some embodiments, the sealing gasket 155 is flexible and able to seal the opening well. For example, the sealing gasket 155 is a silicone gasket.

The fixing member 159 is used to fix the sealing member 150. In some embodiments, the fixing member 159 may be a screw, the top cover 154 is provided with a hole, the screw is threaded into the top cover 154 through the hole. A nut of the screw may abut against the top cover 154, and the screw may be fixedly connected to a countertop on which a sample analysis device is placed, so that the relative position of the screw and the drainage chamber 140 may remain unchanged.

In some embodiments, one end of the second spring member 158 abuts against a bottom of the top cover 154, and the other end of the second spring member 158 abuts against the countertop, so that the second spring member 158 can exert elastic force on the top cover 154 and the countertop, respectively.

In some embodiments, the groove 157 is provided on a side wall of the fixing member 159, a length of the groove 157 in an extension direction of the fixing member 159 is greater than or equal to a thickness of the top cover 154, so that the top cover 154 is capable of being snapped into the groove 157. Without an external force, the top cover 154 and the groove 157 are located on horizontal surfaces at different heights, for example, the top cover 154 is located at a higher horizontal surface than the horizontal surface where the groove 157 is located. It is noted that the horizontal surfaces where the top cover 154 and the groove 157 are located may respectively be considered to be horizontal surfaces corresponding to center positions of the top cover 154 and the groove 157.

In some embodiments, the sealing member 150 further includes a handle 156, the handle 156 is arranged on the top cover 154, by which the top cover 154 can be pulled for movement in a horizontal direction. It should be noted that the handle 156 is not necessary but is only provided to facilitate a horizontal pulling operation of an operator, and the handle 156 may be of any shape for ease of use.

In some embodiments, as shown in FIG. 5, when no external force is applied to the top cover 154, under the elastic force of the second spring member 158, the sealing member 150 does not contact with the opening 141, so that the drainage chamber 140 connects with atmosphere, it may be considered that the sealing member 150 is in the non-sealed state. In some embodiments, a downward pressing pressure is applied to the top cover 154, the second spring member 158 is compressed, and accordingly, the top cover 154 moves downwardly, the sealing gasket 155 under the top cover 154 covers the opening 141 to seal the opening 141. At the same time, the top cover 154 moves to the same height as the groove 157, and by pulling the top cover 154 to the left by the handle 156, the top cover 154 is snapped into the groove 157, so that the top cover 154 can not continue to move, thereby realizing the sealing of the opening 141, and it may be considered that the sealing member 150 is in the sealed state (as shown in FIG. 6). In some embodiments, when it is necessary to convert the sealing member 150 from the sealed state to the non-sealed state, the top cover 154 is pushed to a right by the handle 156 to release the top cover 154 from being snapped into the groove 157, i.e., the top cover 154 is disengaged from the groove 157. The top cover 154 moves upwardly under the elastic force of the second spring member 158 until the top cover 154 is separated from the opening 141, thereby allowing the drainage chamber 140 to connect with the atmosphere, at this time, the sealing member 150 is in the non-sealed state.

In some embodiments of the present disclosure, by providing the sealing member 150 capable of converting between the sealed state and the non-sealed state, the sealing member can be reused to save costs. The sealing member does not have to be removed, which is easy to operate.

In some embodiments, after unsealing the sealing member 150 from the drainage chamber 140, due to factors such as a surface tension of the sample reagent or a concentration of the sample reagent being too large, it may be difficult for the sample reagent to flow into the optical imaging chamber 130, or a flow rate of the sample reagent may be too low. Therefore, in some embodiments, the sample analysis unit 100 further includes a pressure-applying member 160. The pressure-applying member 160 is used to apply a negative pressure to the drainage chamber 140 to enhance a power of the sample reagent flowing from the liquid storage chamber 120 to the optical imaging chamber 130, so that the sample reagent can flow rapidly to the optical imaging chamber 130, thereby improving operation efficiency.

In some embodiments, the pressure-applying member 160 includes but is not limited to, a syringe, a pipette gun, a peristaltic pump, a vacuum pump, etc. After the sealing member 150 is unsealed from the drainage chamber 140, the pressure-applying member 160 is aligned with the opening 141 of the drainage chamber 140 to apply the negative pressure. A degree of applying the negative pressure may be determined by observing the flow rate of the sample reagent in the optical imaging chamber 130.

In some embodiments, the sealing member 150 is provided with a pressure-applying member, and both the sealing member 150 and the pressure-applying member are provided in the opening 141 of the drainage chamber 140.

In some embodiments, pressure-applying member 160 may include an air pump connected with the sealing member 150. The sealing member 150 is controlled, by the air pump, to be opened or closed to control the drainage chamber 140 to connect or disconnect with the atmosphere, and a negative pressure may be applied to the drainage chamber 140 through the air pump. In some embodiments, the sealing member 150 may include a closure member, the closure member capable of being movably opened and closed is provided on the opening.

Merely by way of example, the sealing member 150 may include an orifice tube, the closure member may be provided in the orifice tube, and the orifice tube may be connected to the air pump. The orifice tube refers to a tube with a through hole. In some embodiments, the orifice tube is inserted in the opening 141, and an outer wall of the orifice tube is sealed to the opening 141. In some embodiments, an inner wall of the orifice tube is provided with the closure member. The closure member may be formed by a plurality of flap valves. The flap valves may be resilient tabs, and each of the flap valves may be in a form of a triangle. One of edges of the triangle connects the inner wall of the orifice tube, and the other two edges contact adjacent flap valves, respectively, thereby realizing the sealing of the orifice tube. When the orifice tube is sealed, the drainage chamber 140 is isolated from the atmosphere.

In some embodiments, the air pump may operate to achieve the negative pressure by pumping air, and under the negative pressure, the flap valves with elasticity are no longer in contact with adjacent flap valves. Thus, the drainage chamber 140 is no longer sealed, and the air pump can apply the negative pressure to the drainage chamber 140.

In some embodiments of the present disclosure, by integrating the pressure-applying member 160 and the sealing member 150 into an integrated structure, a structure of the device is simplified and the efficiency is improved.

In some embodiments, the optical imaging chamber 130 is in a bar shape. The bar shape refers to a dimension in a length direction of the optical imaging chamber 130 that is larger than the dimension in a width direction. The bar shape of the optical imaging chamber 130 allows the sample reagent to flow in one direction to spread out, thereby leading to a more uniform distribution of the sample reagent in the optical imaging chamber 130. Further, when the sealing member 150 seals the drainage chamber 140, the optical imaging chamber 130 in the bar shape may more easily restrict the flow of the sample reagent in the liquid storage chamber 120, thereby ensuring the sealing effect.

In some embodiments, the liquid storage chamber 120 and the drainage chamber 140 are respectively located at two ends of the optical imaging chamber 130 along a length direction, which facilitates directing the flow direction of the sample reagent in the liquid storage chamber 120 to make the sample reagent flow in the optical imaging chamber 130 along the length direction.

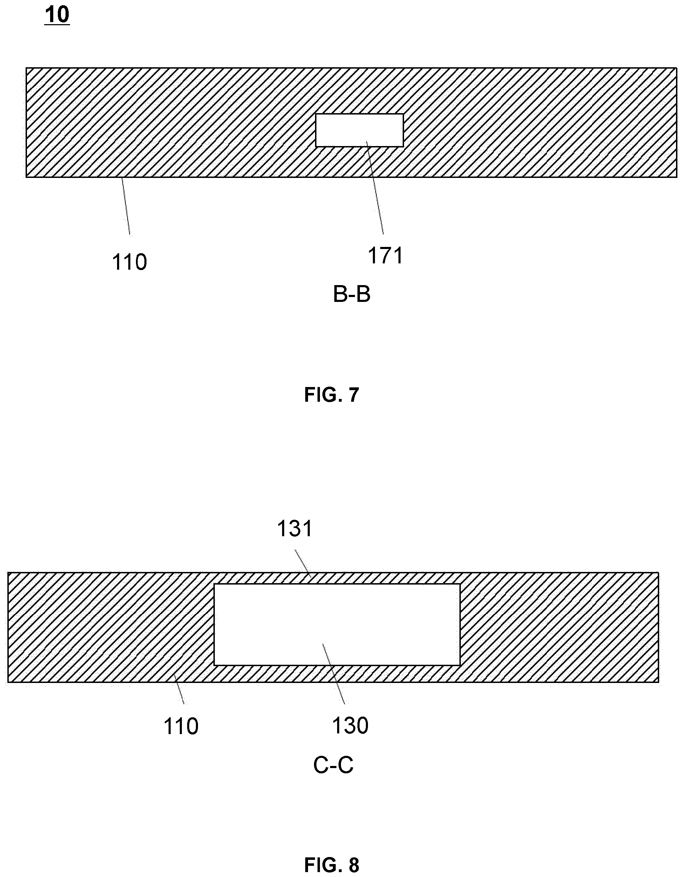

FIG. 7 is a schematic diagram illustrating a B-B cross-section of the sample analysis device illustrated in FIG. 1. FIG. 8 is a schematic diagram illustrating a C-C cross-section of the sample analysis device illustrated in FIG. 1.

As shown in FIG. 2, FIG. 7, and FIG. 8, in some embodiments, the optical imaging chamber 130 and the liquid storage chamber 120 are connected through a first passage 171, which makes the arrangement of a relative position of the optical imaging chamber 130 and the liquid storage chamber 120 more flexible. Different spacing between the optical imaging chamber 130 and the liquid storage chamber 120 may be set according to operational needs. In some embodiments, the first passage 171 is a hollow passage provided inside the base 110. One end of the first passage 171 is connected to the liquid storage chamber 120 and the other end of the first passage 171 is connected to the optical imaging chamber 130. In some embodiments, the first passage 171 includes but is not limited to a straight passage, a curved passage, or the like.

In some embodiments, an area of a cross-section of the first passage 171 perpendicular to a length direction of the first passage 171 is smaller than an area of a cross-section of the optical imaging chamber 130 perpendicular to the length direction of the first passage 171, which is convenient to prevent, by an air pressure generated when the sealing member 150 seals the drainage chamber 140, the sample reagent from flowing into the optical imaging chamber 130, which is more convenient to control, by the pressure-applying member 160, a flow rate of the sample reagent flowing from the liquid storage chamber 120 to the optical imaging chamber 130. In some embodiments, the area of the cross-section of the first passage 171 perpendicular to the length direction of the first passage 171 is larger than a maximum cross-sectional area of a sample particle to be tested, which facilitates the sample reagent to flow into the optical imaging chamber 130 through the first passage 171. The length direction of the first passage 171 is a direction in which the first passage 171 extends from the liquid storage chamber 120 to the optical imaging chamber 130.

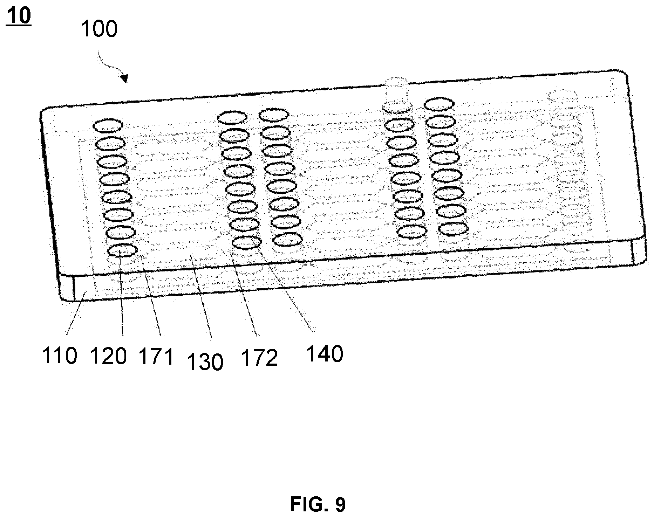

In some embodiments, the optical imaging chamber 130 is connected to the drainage chamber 140 through a second passage 172 (shown in the sample analysis unit 100 in FIG. 9), which makes the arrangement of a relative position of the optical imaging chamber 130 and the drainage chamber 140 more flexible. Different spacing between the optical imaging chamber 130 and the drainage chamber 140 may be set according to operational needs. In some embodiments, the second passage 172 may be hollow provided in the base 110. One end of the second passage 172 is connected to the drainage chamber 140 and the other end of the second passage 172 is connected to the optical imaging chamber 130. In some embodiments, the second passage 172 includes but is not limited to a straight passage, a curved passage, or the like.

In some embodiments, an area of a cross-section of the second passage 172 perpendicular to a length direction of the second passage 172 is less than an area of a cross-section of the optical imaging chamber 130 perpendicular to the length direction of the second passage 172, which prevents an excessively fast flow rate of the sample reagent after the drainage chamber 140 is unsealed, which also facilitates controlling, through the pressure-applying member 160, the flow rate of the sample reagent flowing from the drainage chamber 140 to the optical imaging chamber 130. In some embodiments, the area of the cross-section of the second passage 172 perpendicular to the length direction of the second passage 172 is larger than the maximum cross-section area of the sample particle to be tested, which facilitates discharging the sample reagent from the optical imaging chamber 130 through the second passage 172. The length direction of the second passage 172 is a direction in which the second passage 172 extends from the optical imaging chamber 130 to the drainage chamber 140.

In some embodiments, a top of the optical imaging chamber 130 is provided with a transparent cover 131, so that light can enter the optical imaging chamber 130 and images of the sample reagent can be collected.

In some embodiments, a plurality of optical imaging chambers 130 may be provided to facilitate multiple observations of the sample reagent in a same liquid storage chamber 120. In some embodiments, each of the plurality of optical imaging chambers 130 is connected to the same liquid storage chamber 120. In some embodiments, the plurality of optical imaging chambers 130 are interconnected.

In some embodiments, the sample analysis device further includes a dyeing reagent, the dyeing reagent is arranged in the liquid storage chamber 120. For example, the dyeing reagent is arranged in the liquid storage chamber 120 by adsorption, coating, or encapsulation. The dyeing reagent may allow normal cells and apoptotic or broken cells to take on different colors to facilitate classification detection of activity of cells. In some embodiments, the dyeing reagent includes but is not limited to trypan blue, acridine orange (AO), fluorescent dye PI (propidium iodide), or the like, or any combination thereof.

In some embodiments, the liquid storage chamber 120 is provided with a dyeing reagent layer or a reagent pre-embedding chamber. In some embodiments, the dyeing reagent layer may be formed by adsorption, coating, etc. of the dyeing reagent. In some embodiments, the reagent pre-embedding chamber is used to pre-embed or coat the dyeing reagent. For example, the dyeing reagent may be a pre-embedded reagent or coated reagent packaged with a packaging film. The dyeing reagent is fixed in the liquid storage chamber 120 by the package to avoid leakage due to the movement of the base 110. In use, the dyeing reagent may be exposed by puncturing or tearing the package.

In some embodiments, the base 110 is a glass structure. The glass structure is lighttransmitting, which is convenient for observing the amount and flow of the sample reagent in the liquid storage chamber 120, the optical imaging chamber 130, and the drainage chamber 140 from the outside.

In some embodiments, the base 110 is a plastic structure, which is light in weight and strong in biological stability. In some embodiments, the base 110 may be a transparent plastic structure to facilitate viewing the amount and flow of sample reagent in the liquid storage chamber 120, the optical imaging chamber 130, and the drainage chamber 140 from the outside. In some embodiments, the base 110 may be a non-transparent plastic structure. In such cases, the transparent cover 131, which may be a glass cover or a transparent plastic cover, is provided on a top of the optical imaging chamber 130, to facilitate observing the sample reagent in the optical imaging chamber 130.

FIG. 9 is a schematic diagram illustrating a structure of a sample analysis device according to some other embodiments of the present disclosure.

As shown in FIG. 9, in some embodiments, the sample analysis device 10 includes a plurality of sample analysis units 100, such as two, three, four, six, eight, ten, etc. Different sample analysis units 100 may be used to test different sample reagents, or different sample analysis units 100 may be used to test the same sample reagent under different conditions.

In some embodiments, the plurality of sample analysis units 100 are combined in an array, e.g., the sample analysis device 10 may be a high-throughput consumable including eight sample analysis units 100, twelve sample analysis units 100, twenty-four sample analysis units 100, fortyeight sample analysis units 100, or ninety-six sample analysis units 100.

In some embodiments, the liquid storage chamber 120, the optical imaging chamber 130, and the drainage chamber 140 of the plurality of sample analysis units 100 may be provided on the same base 110. In some embodiments, the optical imaging chambers 130 of the plurality of sample analysis units 100 are not connected to each other.

In some embodiments, the optical imaging chambers 130 of at least two sample analysis units 100 are connected, so that the sample reagents in the optical imaging chambers 130 can be exchanged with each other, thereby increasing a space for the sample reagents to flow. In some embodiments, as shown in FIG. 1, the at least two sample analysis units 100 are further provided with a docking hole, one end of the docking hole is connected to the optical imaging chamber 130 of one of the at least two sample analysis units 100, and the other end of the docking hole is connected to the optical imaging chamber 130 of the other of the at least two sample analysis units 100.

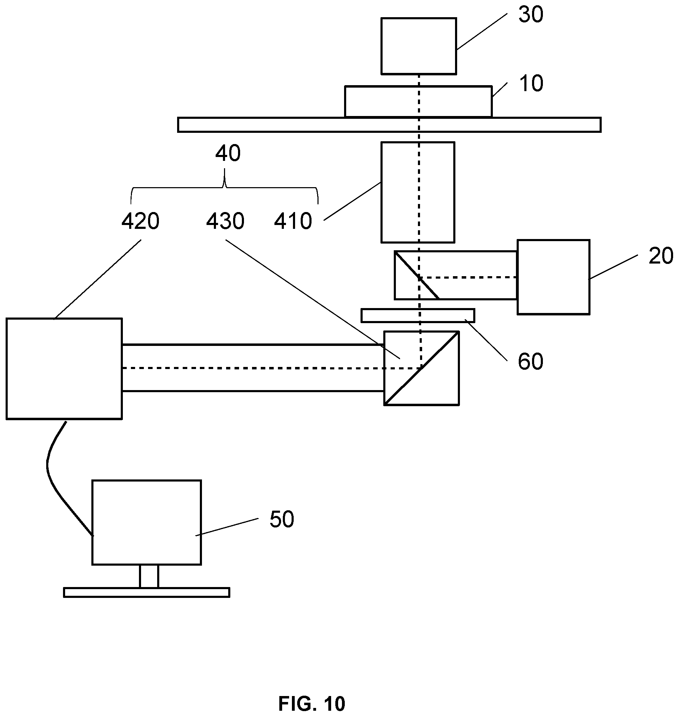

FIG. 10 is a schematic diagram illustrating a structure of a sample analysis system according to some embodiments of the present disclosure.

As shown in FIG. 10, a sample analysis system is provided in some embodiments of the present disclosure., and the sample analysis system includes the sample analysis device 10 described in any one of the above embodiments. Moreover, the sample analysis system includes at least one fluorescent light source 20, at least one bright field light source 30, at least one optical system configured to narrow a fluorescent light beam and/or a bright field light beam, a detection device 40, and a computing unit 50.

In some embodiments, the fluorescent light source 20 is a light emitting diode, etc. In some embodiments, the bright field light source 30 is a light emitting diode. In some embodiments, the optical system is a calibrator, etc. In some embodiments, the detection device 40 is a camera 420 that includes thermoelectric cooling capabilities, such as a charge-coupled device or a CCD camera. In some embodiments, the detection device 40 includes an imaging objective 410, the camera 420, a folding mirror 430, etc. The imaging objective 410 is configured to image the sample reagent. The folding mirror 430 is configured to direct a light reflected from the sample analysis device 10 into the camera 420. In some embodiments, the computing unit 50 may be a device such as a processor, a computer, etc.

In some embodiments, the bright field light source 30, the sample analysis device 10, the imaging objective 410, and the folding mirror 430 are sequentially positioned in a straight line, and the bright field light source 30 is configured to emit a light onto the optical imaging chamber 130 of the sample analysis device 10. The optical system may be provided between the sample analysis device 10 and the bright field light source 30. The optical system focuses a light emitted from the bright field light source 30 and directs the light into the optical imaging chamber 130 of the sample analysis device 10. In some embodiments, the bright field light source 30 is used to irradiate on the optical imaging chamber 130 and obtain a bright field image of the sample reagent by the detection device 40.

In some embodiments, the fluorescent light source 20 is arranged on a side of the imaging objective 410 and the folding mirror 430 and configured to emit a fluorescent light to the sample analysis device 10. In some embodiments, the optical system is arranged on an optical path of the fluorescent light source 20 and configured to focus a light emitted from the fluorescent light source 20. In some embodiments, the sample analysis system further includes an optical filter 60 configured to allow an excitation light to irradiate the sample analysis device, and only the light emitted from the sample analysis device is allowed to be imaged by the detection device 40. For example, the fluorescent light source 20 emits the excitation light through the optical system to the optical filter 60, which may redirect the excitation light from the fluorescent light source 20 onto the optical imaging chamber 130 of the sample analysis device 10. In some embodiments, the fluorescent light source 20 is used to irradiate the optical imaging chamber 130 and obtain a fluorescent light image of the sample reagent through the detection device 40.

In some embodiments, the computing unit 50 is configured to count the sample analysis device 10 based on the fluorescent light image and/or the bright field image. The computing unit 50 obtains bright field images and fluorescent light images of cells or biomolecules in the detection device 40, analyzes a count of the cells or biomolecules, a size and a fluorescent light intensity of each of the cells, and then converts the above data into a concentration, a size, a fluorescent histogram, a scatter plot, etc.

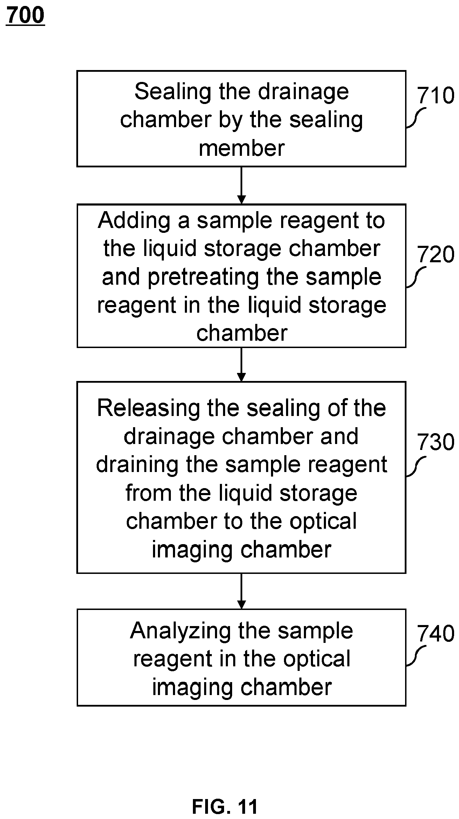

FIG. 11 is a flowchart illustrating an exemplary sample analysis method according to some embodiments of the present disclosure.

As shown in FIG. 11, a sample analysis method is provided in some embodiments of the present disclosure, and the sample analysis method may be implemented on the sample analysis device 10 in any one of the above embodiments. The sample analysis method may include process 700.

In step 710, the drainage chamber 140 is sealed by the sealing member 150.

In some embodiments, the drainage chamber 140 is sealed by the sealing member 150 to isolate the opening 141 of the drainage chamber 140 from atmosphere.

In step 720, a sample reagent is added to the liquid storage chamber 120, and the sample reagent is pretreated in the liquid storage chamber 120.

In some embodiments, the sample reagent is added to the liquid storage chamber 120, and the sample reagent is a biological cell sample. In some embodiments, the liquid storage chamber 120 may be pre-embedded with a dyeing reagent for dyeing the sample reagent. In some embodiments, the dyeing reagent is added to the liquid storage chamber 120 to dye the sample reagent when the sample reagent is filled.

After the sample reagent is added into the liquid storage chamber 120, the sample reagent may seal the first passage 171 between the liquid storage chamber 120 and the optical imaging chamber 130, and the sealing member 150 seals the opening 141 of the drainage chamber 140, so that a sealed space is formed in the drainage chamber 140 and the optical imaging chamber 130, and an air pressure in the sealed space prevents the sample reagent in the liquid storage chamber 120 from flowing into the optical imaging chamber 130.

In some embodiments, a pretreatment is performed on the sample reagent in the liquid storage chamber 120 to make the sample reagent meet a detection condition. The pretreatment includes but is not limited to, performing at least one operation of shaking, staining, mixing, stirring, blowing, and incubating on the sample reagent in the liquid storage chamber 120.

In step 730, the sealing member of the drainage chamber 140 is removed, and the sample reagent is drained from the liquid storage chamber 120 to the optical imaging chamber 130.

In some embodiments, the sealing member of the drainage chamber 140 is removed to allow the drainage chamber 140 and the optical imaging chamber 130 to connect with the atmosphere, at this time, the sample reagent can be drained from the liquid storage chamber 120 to the optical imaging chamber 130.

In some embodiments, a flow rate of the sample reagent flowing into the optical imaging chamber 130 is controlled by applying a negative pressure to the drainage chamber 140 through the pressure-applying member 160.

In step 740, the sample reagent is analyzed in the optical imaging chamber 130.

In some embodiments, a bright field image of the sample reagent in the optical imaging chamber 130 is obtained by using the bright field light source 30, and/or a fluorescent image of the sample reagent in the optical imaging chamber 130 is obtained by using the fluorescent light source 20. The sample reagent is then analyzed by analyzing, by the detection device 40 and the computing unit 50, the bright field image and/or the fluorescent light image.

In some embodiments, analyzing the sample reagent includes obtaining one or more of count number, concentration, size, morphology, transduction efficiency, apoptosis, viability, cell cycle, surface marker of cell population, and/or cell population ratio in the sample reagent. In some embodiments, analyzing the sample reagent includes obtaining a percentage or fraction of a stain-labeled cell population in the sample reagent.

The embodiments of the present disclosure may include but are not limited to the following beneficial effects. (1) According to the sample analysis device 10 in the above embodiments, the liquid storage chamber 120 and the optical imaging chamber 130 are connected, so that the sample reagent can flow directly from the liquid storage chamber 120 to the optical imaging chamber 130 without the need to move the sample reagent to the optical imaging chamber 130 through an external device such as a pipetting device, which simplifies the operation process and prevents the sample reagent from being contaminated by external impurities. By providing the drainage chamber 140 and the sealing member 150, the sealing member 150 removably seals the drainage chamber 140 to control the sample reagent to selectively flow into the optical imaging chamber 130. When the sealing member 150 seals the drainage chamber 140, the sample reagent can not flow into the optical imaging chamber 130, which facilitates filling, storing, and preparing the sample reagent in the liquid storage chamber 120. When the sealing member 150 is removed from the drainage chamber 140, the sample reagent can flow into the optical imaging chamber 130 to simplify the transfer operation of the sample reagent. (2) The pressure-applying member 160 is used to apply a negative pressure to the drainage chamber 140 to enhance a power of the sample reagent flowing from the liquid storage chamber 120 to the optical imaging chamber 130, so that the sample reagent can flow rapidly to the optical imaging chamber 130, thereby improving operation efficiency. (3) The bar shape of the optical imaging chamber 130 allows the sample reagent to flow in one direction to spread out, thereby leading to a more uniform distribution of the sample reagent in the optical imaging chamber 130. Further, when the sealing member 150 seals the drainage chamber 140, the optical imaging chamber 130 in the bar shape may more easily restrict the flow of the sample reagent in the liquid storage chamber 120, thereby ensuring the sealing effect. (4) The liquid storage chamber 120 and the drainage chamber 140 are respectively located at two ends of the optical imaging chamber 130 along a length direction, which facilitates directing the flow direction of the sample reagent in the liquid storage chamber 120 to make the sample reagent flow in the optical imaging chamber 130 along the length direction. (5) The optical imaging chamber 130 and the liquid storage chamber 120 are connected through a first passage 171, which makes the arrangement of a relative position of the optical imaging chamber 130 and the liquid storage chamber 120 more flexible. Different spacing between the optical imaging chamber 130 and the liquid storage chamber 120 may be set according to operational needs. It should be noted that different embodiments may have different beneficial effects, and in different embodiments, the possible beneficial effects may be any one or a combination of the above, or any other possible beneficial effect.

The basic concept has been described above, obviously, for those skilled in the art, the above-detailed disclosure is only an example, and does not constitute a limitation to the present disclosure. Although not expressly stated here, those skilled in the art may make various modifications, improvements, and corrections to the present disclosure. Such modifications, improvements, and corrections are suggested in the present disclosure, so such modifications, improvements, and corrections still belong to the spirit and scope of the exemplary embodiments of the present disclosure.

## Claims

1. A sample analysis device, comprising a base and one or more sample analysis units provided on the base, wherein each sample analysis unit includes:
a liquid storage chamber arranged on the base;
an optical imaging chamber arranged on the base, wherein a side of the optical imaging chamber is connected to the liquid storage chamber;
a drainage chamber arranged on the base, wherein the drainage chamber is connected to the other side of the optical imaging chamber, the drainage chamber is provided with an opening connecting with atmosphere; and
a sealing member removably sealing the opening.

2. The sample analysis device of claim 1, wherein the sealing member includes a sealing plug, a sealing membrane, or a sealing cap.

3. The sample analysis device of claim 1, wherein the sample analysis unit further includes a pressure-applying member configured to apply a negative pressure to the drainage chamber.

4. The sample analysis device of claim 1, wherein the optical imaging chamber is in a bar shape, and the liquid storage chamber and the drainage chamber are respectively located at two ends of the optical imaging chamber along a length direction.

5. The sample analysis device of claim 1, wherein
the optical imaging chamber is connected to the liquid storage chamber through a first passage, an area of a cross-section of the first passage perpendicular to a length direction of the first passage being smaller than an area of a cross-section of the optical imaging chamber perpendicular to the length direction of the first passage, the area of the cross-section of the first passage perpendicular to the length direction of the first passage being larger than a maximum cross-section area of a sample particle to be tested, and/or
the optical imaging chamber is connected to the drainage chamber through a second passage, an area of a cross-section of the second passage perpendicular to a length direction of the second passage being smaller than an area of a cross-section of the optical imaging chamber perpendicular to the length direction of the second passage.

6. The sample analysis device of claim 1, wherein the liquid storage chamber is provided with a dyeing reagent layer or a reagent pre-embedding chamber.

7. The sample analysis device of claim 1, wherein optical imaging chambers of at least two sample analysis units are connected.

8. The sample analysis device of claim 1, wherein a top of the optical imaging chamber is provided with a transparent cover.

9. The sample analysis device of claim 1, wherein the sealing member is connected to the opening, and the sealing member is capable of converting between a sealed state and a non-sealed state.

10. The sample analysis device of claim 9, wherein the sealing member includes a connecting member, the connecting member is removably inserted in the opening, a gas channel is provided in the connecting member, the connecting member is moved to convert between a state of the gas channel to connect the drainage chamber and atmosphere and a state of the gas channel to disconnect the drainage chamber and the atmosphere, or
the sealing member includes a top cover, a sealing gasket, a fixing member, and a second spring member, the sealing gasket is arranged under the top cover and corresponding to the opening, the fixing member passes through the top cover and maintains a fixed position relative to the drainage chamber, the fixing member is provided with a groove matching with the top cover, the second spring member is sleeved on the fixing member, and the second spring member is located between the top cover and the base, the sealing gasket seals the opening when the top cover is snapped into the groove, and the second spring member is capable of pushing the top cover to move to open the opening when the top cover is pushed to disengage the top cover from the groove.

11. The sample analysis device of claim 1, wherein the sample analysis unit further includes a pressure-applying member configured to apply a negative pressure to the drainage chamber; and the pressure-applying member is arranged on the sealing member.

12. A sample analysis system, comprising a sample analysis device of any one of claims 1-11.

13. The sample analysis system of claim 12, wherein the sample analysis system further comprises:
at least one fluorescent light source;
at least one bright field light source;
at least one optical system configured to narrow a fluorescent light beam and/or a bright field light beam;
a detection device; and
a computing unit.

14. A sample analysis method for analyzing a sample reagent using the sample analysis device of any one of claims 1-11, wherein the sample analysis method comprises:
adding the sample reagent to the liquid storage chamber;
removing the sealing member of the drainage chamber and draining the sample reagent from the liquid storage chamber to the optical imaging chamber; and
analyzing the sample reagent in the optical imaging chamber.

15. The sample analysis method of claim 14, wherein the pretreating the sample reagent in the liquid storage chamber includes:
performing at least one operation of shaking, staining, mixing, stirring, blowing, and incubating on the sample reagent in the liquid storage chamber.
